# EUROPEAN PATENT SPECIFICATION

(11) **EP 1 666 660 B1**
(45) Date of publication and mention of the grant of the patent: **30.07.2008**
(21) Application number: 04106208.4
(22) Date of filing: 01.12.2004
(51) Int. Cl.: D06F 58/28, D06F 58/08, H02H 7/085, H02K 17/08, H02P 1/44

(54) **Household clothes washing machine with starting device**
Haushaltswäschetrockner mit Startvorrichtung
Sèche-inge domestique avec dispositif de démarrage

(43) Date of publication of application: 07.06.2006
(73) Proprietor: Electrolux Home Products Corporation N.V., 1930 Zaventem (BE)
(72) Inventor: Cimetta, Silvano, 33100, Treviso (IT); Noviello, Flavio, 33081, Aviano (PN) (IT); Napolitano, Gennaro, 33170, Pordenone (IT)
(74) Representative: Giugni, Valter

(56) References cited:
- WO-A-20/04059066
- PATENT ABSTRACTS OF JAPAN vol. 1998, no. 14, 31 December 1998 (1998-12-31) -& JP 10 257795 A (MATSUSHITA ELECTRIC WORKS LTD), 25 September 1998 (1998-09-25)

## Description

This invention refers to an improved kind of clothes drying machine, preferably of the type for use in households, which is particularly efficient in the energy saving.-

Clothes drying machines are largely known in the art to generally operate according to different principles and modes, including the condenser mode, i.e. the operation based on the condensation of the moisture contained in a stream of hot drying air that is first blown through the drum, where it removes moisture from the clothes contained therein, or exhausting outside the hot and moisture-laden air stream.

These machines are largely known to be substantially made by installing a ventilation system, i.e. usually a blower formed by a fan and an electric motor associated thereto, and a heating arrangement, which draw air from the outside and, via an appropriate conduit arrangement, heat up such air and blow it into and through the drum holding the clothes to be dried.-

Therefore, upon having been so blown into the drum, the hot air causes the moisture contained in the clothes to evaporate and becomes almost saturated, and finally is forced by said fan to create a continuous flow that is conveyed either through a condensation arrangement, or into the surrounding ambient.-

The drum is made to rotate in a continuous way by an asynchronous motor all the whole drying period long; however in order not to avoid well known and unwanted wrinkling effects, said drum is made to rotate not in only one rotation sense, but is alternatively rotated in the two opposite senses, with a short logical stopping between the two opposite rotations.-

The time length of said rotation periods of the drum are lasting about 4 minutes in the main rotation sense, and 15-30 seconds in the opposite sense, and to rotate the drum usually an asynchronous motor is used provided with a phase displacement capacitor able of starting the rotation.-

The machine is normally supplied with a 230 V voltage, but according to the norms, it shall also be able to operate with a voltage of 10 % less than the above nominal voltage; in order to make the drum rotation to start at such reduced voltage, both the motor and the electric capacitor must be appropriately over-sized; however such need generates two drawbacks:
1) the first one obviously consists in the higher motor and capacitor costs, that are marked up compared with motors supplying the needed power at the nominal voltage;
2) the second drawback is referred to the power consumption; indeed it is well known that the starting torque needed to drive into rotation the drum, when full of wet laundry and starting from a motionless state, is remarkably higher than the torque required to keep on the rotation after the starting; this fact is well known, and is due both to the need to overcome the normal initial frictions, and also because in the starting time the laundry is fully laid on the drum bottom, and so the force of the laundry weight has to be exceeded, as the laundry has to be raised from the drum bottom and taken at a certain height into the drum.-

On the contrary, during the drum rotation said starting torque does not exist, as the laundry load is distributed both on the baffles going up, but also when the bffles are going down, on which the laundry weight operates a force which tents to speed up the drum rotation, and so to give a contrary action which counter-balances the gravity force of that portion of the laundry load that in the same time is being raised.-

The counter-balance between the two type of forces, acting in the slowing down and in the speeding up the drum motion, gives the result of balancing and so of zeroing of the resistance of the laundry load which is raised.-

In practice, during the drum rotation the effect of the laundry load is remarkably negligible on the torque the asynchronous motor is requested to supply.-

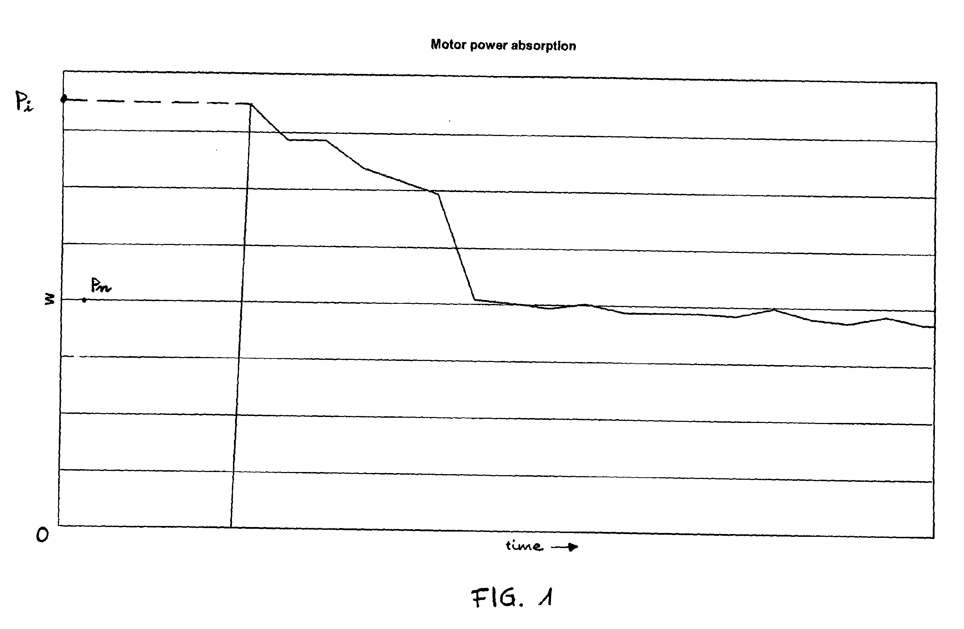

To sum up, the power the motor has to supply during a rotation phase is symbolically represented in fig. 1, where the required power in steady working condition is about the 60 % of the value of the initially required power Pi.-

That means that, after the transient condition in the motor starting phase, the motor torque becomes excessive and partially useless in order to correctly driving the drum into rotation; such exceeding motor torque is then turned into over-heating that is then dispersed by the motor itself, however suffering an energy wastage.-

However it must be also remembered that periodically the motor stops to change the rotation sense, and so each time the rotation sense changes, the maximum torque is requested to allow the motor restarting; such requirement becomes absolutely mandatory when the power supply voltage falls down to the minimum level, or even less, of its tolerance.-

In order to give an idea of the energy consumption that is wasted and therefore could be saved, the following information is offered for evaluation.-

With a 220 Watts motor working for a cycle time lasting two hours (average values for a drying cycle of the household type), the energy consumption exceeding the appliance needs is about 120 Watt.hour; said consumption is therefore a real loss, as it doesn't improve in any way the machine performance.-

From the Japanise Patent JP 10257795 it is known to connect a plurality of capacitors in parallel among them and also with the power supply connection of an induction motor, in order to increase the torque and/or speed; said capacitors are connected in sequence, depending on the electrical current detected on the motor.-

However such solution doesn't consider the fact that, in an household drying machine, the problem to be solved is to start the motor which has to supply an extra-torque that however must be continued only for a pre-determined time length, each time the drum re-starts the rotation; after said pre-determined time length the extra-torque must be automatically stopped, so that the motor can deliver only the nominal torque at the steady running state, with energy consumption properly and correspondingly reduced.-

It would therefore be desirable to implement a drying machine as it is e.g. disclosed in WO 2004/059066 provided with an asynchronous motor and associated devices for the drum rotation control, which is not too over-sized to win the described resistance of initial rotation, (weight and friction), but however is able to supply the requested torque without significant energy losses in the subsequent phase of continuous rotation.

According to the present invention, this aim is reached in a clothes drying machine incorporating the features as recited in the appended claims.

Features and advantages of the present invention will be more readily understood from the description that is given below by way of non limiting example with reference to the accompanying drawings, in which:
- fig. 2 shows a symbolic overall schematic of electrical connections and devices associated to the motor for the drum rotation in a drying machine according to the invention,
- fig. 3 symbolically shows the diagram of a working mode of the devices and circuits according in the drying machine of fig. 2,

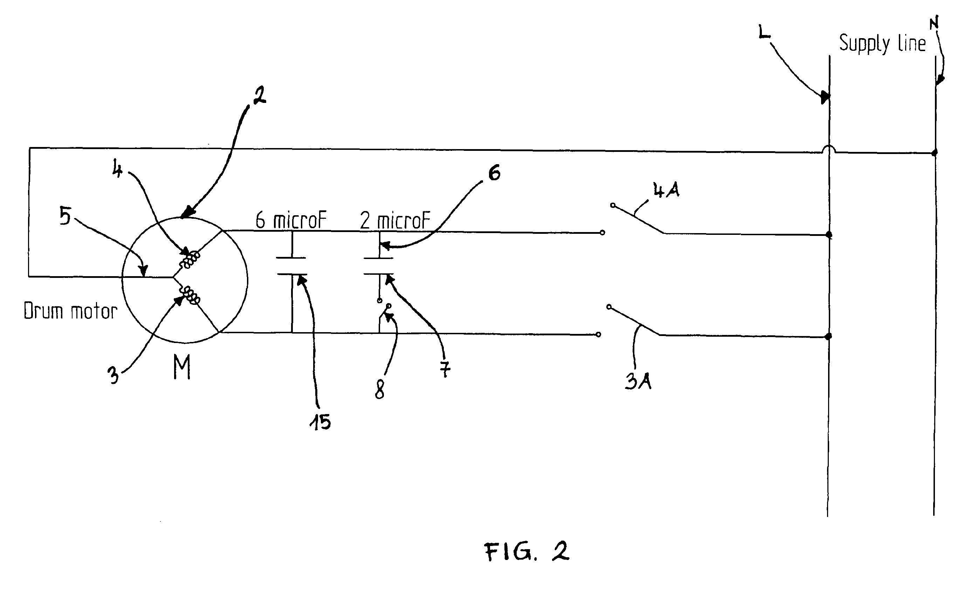

With ref. to fig.2, a machine according to a preferred embodiment of the invention is provided with a drum, not shown, for the laundry load to be dryed, to which an asynchronous motor is associated by known and not shown means, so that said motor is able of driving into rotation said drum in both the rotation senses, according to signals and/or commands supplied by other control and programming means, not shown.-

Said asynchronous motor is provided with two inner windings 3 and 4, realized as to drive into rotation said drum in the two opposite senses, and with a connection 5 steadly linked to the ground wire N of the electrical power supply line.-

Each of said windings 3 and 4 is connected to the "L" line of the electrical power supply by a respective switch 3A and 4A; both said switches are selectively operable so that each of said two windings can be separately and selectively connected to the line "L" so that the motor, and with it the drum, is made to rotate in the two opposite senses.-

A phasing capacitor 15 of conventional type is placed between said two windings, whose purpose is to cause a phase displacement between said two windings so that both the starting, and the subsequent steady rotation of the motor may be correctly implemented.-

According to the invention, in parallel to the phasing capacitor 15 a secondary circuit 6 is arranged, which comprises, in series, a secondary capacitor 7 and a selectively operable switch 8.-

The purpose of said secondary capacitor is to increase the overall capacitance placed between said windings 3 and 4, and so to increase the electromagnetic field into the motor so as to improve the torque supplied by the motor, according to known modes.

Therefore after each motor stopping, and before of the change of rotation sense, said switch 8 is being closed so that the capacitance of the capacitor 7 is added to the capacitance of the capacitor 5; the motor is then put in the condition of starting the drum rotation.-

Once the drum has started its rotation, as previously said the maximum torque supplied by the motor is no more required, and so the switch 8 is being opened, what cuts off the secondary capacitor 7, resulting in the reduction of the motor supplied torque, that however must be still enough to keep on the drum rotation.-

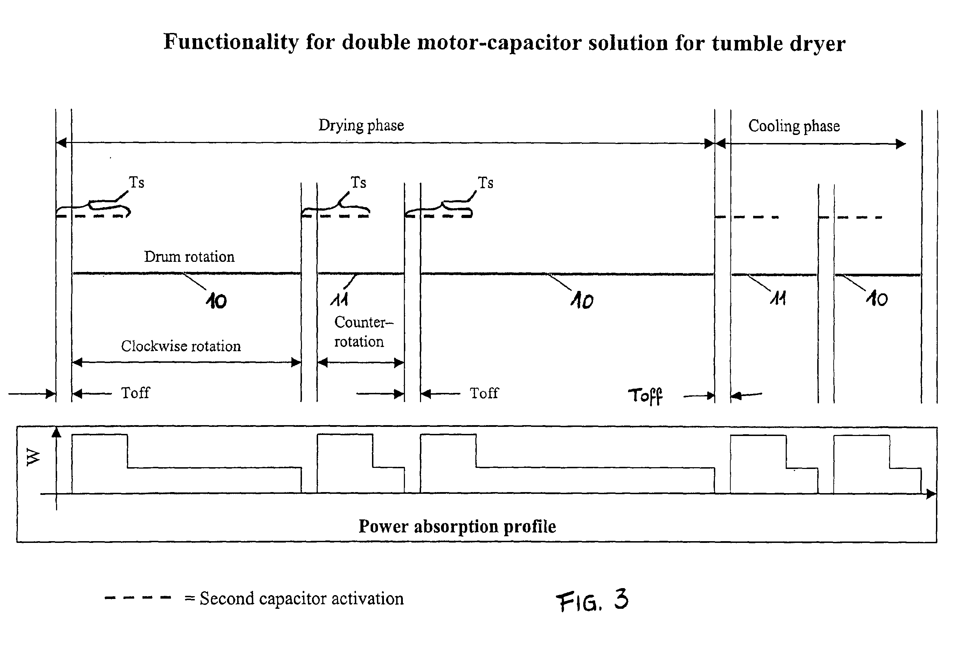

With ref. to fig. 3, it is noted that the line 10 represents the rotation condition of the motor and then of the drum, in one of the rotation sense, and the line 11 represents the rotation condition in the opposite sense; obviously said lines are alternate each other, due to well known reasons.-

Between one of said lines and the following one, a respective time interval Toff is put in, which represents the fact that the drum is shortly stopped between the two times 10 and 11 when the drum rotates in respective opposite senses.-

From the times To, when the line 10 or 11 is being interrupted, i.e. from the time when each of said time intervals Toff begins, said switch 8, which connects the secondary capacitor 7, is closed for a short period Ts.-

In the same fig. 3 said intervals Ts are lasting longer, obviously, than the time lenght of the time intervals Toff, to allow the capacitor 7 be connected at the beginning and for a certain time lenght, "Ts - Toff', after the beginning of any rotation, as shown by the lines 10 and 11; the connection and the timing of the switch 8 is controlled by programming and control means in a obviously synchronized way both with the controls for the beginning of the drum rotation, and with the beginning of the time intervals Toff when the drum is kept motionless.

It has been also observed that the time lenght of the period when said switch 8 can be closed, after the beginning of the drum rotation, i. e. the time lenght Ts - Toff, is advantageously longer than 2,5 seconds, and so said programming and control means have to be implemented accordingly.-

Moreover to achieve an optimum balance and working mode, it has been proved that the ratio between the capacitance of said phasing capacitor 15 and said secondary capacitor 7 has not to exceed 3 (three).-

## Claims

1. Laundry drying machine comprising:
- a drum (1) able of containing the laundry to be dryed,
- an asynchronous motor apt to selectively drive into rotation said drum in a main sense and in a secondary sense, contrary to the main sense,
- said motor being provided with two separate windings (3, 4) and with respective and selectively operable connection means (3A, 4A) to the electrical power supply line (L),
- a phasing capacitor (15),
- programming and control means associated to the machine functional devices,
- a secondary circuit (6) connected in parallel to said phasing capacitor (15), and provided, in series with a secondary capacitor (7) and an electric switch (8) which is selectively activable by said programming and control means, said electric switch (8) is controlled by said programming and control means to close said secondary circuit (6) during any starting time length (Ts - Toff) of the rotation of said drum in both said rotation senses.

2. Laundry drying machine according to claim 1, **characterized in that** after said starting time length (Ts - Toff) of said drum in any of said rotation senses, said electric switch (8) is controlled by said programming and control means to open, and to stay open for the whole remaining rotation time of said drum, till its first stopping.

3. Laundry drying machine according to claims 1 or 2, **characterized in that** each of said starting time length (Ts - Toff) of the drum rotation lasts a minimum of 2,5 seconds.

4. Laundry drying machine according to any previous claim, **characterized in that** the ratio between the capacitance of said phasing capacitor (15) and said secondary capacitor (7) is not bigger than 3.

## Patentansprüche

1. Wäschetrocknermaschine, Folgendes umfassend:
- eine Trommel (1), die geeignet ist, die zu trocknende Wäsche aufzunehmen,
- einen Asynchronmotor, der geeignet ist, die Trommel selektiv in eine Hauptrichtung und in eine der Hauptrichtung entgegengesetzte Sekundärrichtung in Rotation zu Versetzen,
- wobei der Motor mit zwei getrennten Wicklungen (3, 4) und mit zugehörigen, selektiv nutzbaren Anachlussmitteln (3A, 4A) für den Anschluss an die elektrische Stromversorgung (L) ausgestattet ist,
- einen Phasenabgleichkondensator (15),
- Programmier- und Steuermittel, die den Funktionsvorrichtungen der Maschine zugeordnet sind,
- einen sekundärstromkreis (6), der parallel zu dem Phasenabgleichkondensator (15) geschaltet und in Serie geschaltet mit einem Sekundärkondensator (7) und einem elektrischen Schalter (8), der mit den Programmier- und Steuermitteln selektiv aktivierbar ist, vorgesehen ist,
**dadurch gekennzeichnet, dass** der elektrische Schalter (8) von den Programmier- und Steuermitteln gesteuert wird, um den Sekundärstromkreis (6) während Startzeiten (Ts - Toff) der Rotation der Trommel in beiden Rotationsrichtungen zu schließen.

2. Wäschetrocknermaschine gemäß Anspruch 1, **dadurch gekennzeichnet, dass** nach der Startzeit (Ts - Toff) der Trommel in einer der Rotationsrichtungen der elektrische Schalter (8) von den Programmier- und Steuermitteln so gesteuert wird, dass er geöffnet wird und während der gesamten restlichen Rotationszeit der Trommel bis zu deren erstem Anhalten geöffnet bleibt.

3. Wäschetrocknermaschine gemäß Anspruch 1 oder 2, **dadurch gekennzeichnet, dass** jede Startzeit (Ts - Toff) der Trommelrotation mindestens 2,5 Sekunden lang dauert.

4. Wäsehetrocknermaschine gemäß einem der vorangehenden Ansprüche, **dadurch gekennzeichnet, dass** das Verhältnis zwischen der Kapazität des Phasenabgleichkondensators (15) und des Sekundärkondensators (7) nicht größer als 3 ist.

## Revendications

1. Machine séche-linge comprenant :
- un tambour (1) apte à contenir le linge à sécher,
- un moteur asynchrone apte à entraîner en rotation de manière sélective ledit tambour dans un sens principal et dans un sens secondaire opposé au sens principal,
- ledit moteur étant équipé de deux enroulements (3,4) séparés et de moyens (3A,4A) dé connexion à la ligne d'alimentation en puissance électrique (L) respectifs et pouvant fonctionner de manière sélective,
- un condensateur de déphasage (15);
- des moyens de programmation et, de commande associés aux dispositifs fonctionnels de la machine,
- un circuit secondaire (6) relié en parallèle au dit condensateur de déphasage (15), et équipe en série d'un deuxième condensateur (7) et d'un interrupteur électrique (8) qui est activable de manière sélective par lesdits moyens de programmation et de commande, et de commande, ledit interrupteur électrique (8) est commandé par lesdits moyens de programmation et de commande pour fermer ledit circuit secondaire (6) pendant toute la durée du temps de démarrage (Ts - Toff) de la rotation dudit tambour dans les dits deux sens de rotation.

2. Machine sèche-linge selon la revendication 1, **caractérisée en ce que** après ladite durée du temps de démarrage (Ts - Toff) dudit tambour dans l'un quelconque desdits sens de rotation, ledit interrupteur électrique (8) est commandé par les dits moyens de programmation et de commande pour s'ouvrir, et pour rester ouvert pendant tout le temps de rotation restant dudit tambour, jusqu'à son premier arrêt.

3. Machine sèche-linge selon la revendication 1 ou 2, **caractérisée en ce que** chacune des durées de temps de démarrage (Ts - Toff) de la rotation du tambour est au minimum de 2,5 secondes.

4. Machine sèche-linge selon l'une quelconque des revendications précédentes, **caractérisée en ce que** ce que le rapport entre la capacité dudit condensateur de déphasage (15) et dudit deuxième condensateur (7) n'est pas plus grand que 3.
